(19) Europäisches Patentamt
European Patent Office
Office européen des brevets

(11) **EP 3 310 640 B1**

(12) **FASCICULE DE BREVET EUROPEEN**

(45) Date de publication et mention de la délivrance du brevet:
**26.08.2020 Bulletin 2020/35**

(21) Numéro de dépôt: **16741086.9**

(22) Date de dépôt: **17.06.2016**

(51) Int Cl.:
**B62D 6/00** *(2006.01)*   **B62D 5/04** *(2006.01)*

(86) Numéro de dépôt international:
**PCT/FR2016/051478**

(87) Numéro de publication internationale:
**WO 2016/203171 (22.12.2016 Gazette 2016/51)**

(54) **UTILISATION D'UN FILTRE À AVANCE DE PHASE POUR SÉPARER LE RÉGLAGE DU RESSENTI AU VOLANT DU RÉGLAGE DE LA STABILITÉ D'UNE COMMANDE DE DIRECTION ASSISTÉE**

VERWENDUNG EINES PHASENVERSCHIEBUNGSFILTERS ZUR TRENNUNG DER EINSTELLUNG VON DER LENKWAHRNEHMUNG VON DER EINSTELLUNG DER STEUERUNGSTABILITÄT EINER SERVOLENKUNG

USE OF A PHASE-LEAD FILTER TO SEPARATE THE SETTING OF STEERING FEEL FROM THE SETTING OF CONTROL STABILITY FOR A POWER STEERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2015 FR 1555640**

(43) Date de publication de la demande:
**25.04.2018 Bulletin 2018/17**

(73) Titulaire: **JTEKT Europe**
**69540 Irigny (FR)**

(72) Inventeurs:
• **MOULAIRE, Pascal**
**69890 La Tour De Salvagny (FR)**
• **PELTIER, Hervé**
**69440 Saint Maurice sur Dargoire (FR)**
• **THIERY, Arnaud**
**69530 Brignais (FR)**
• **SLAMA, Tahar**
**69130 Ecully (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A2- 1 714 852   EP-A2- 2 177 421**
**EP-A2- 2 323 250   US-A1- 2013 311 044**

EP 3 310 640 B1

## Description

La présente invention concerne les procédés d'asservissement permettant de gérer un dispositif de direction assistée.

La présente invention concerne plus particulièrement un procédé d'asservissement qui utilise le couple volant, c'est-à-dire le couple exercé par le conducteur sur le volant de conduite, comme grandeur asservie.

On connaît déjà des procédés au cours desquels on définit, en fonction de la situation dynamique du véhicule (vitesse, accélération latérale, etc.) et de la configuration du dispositif de direction (angle de braquage, vitesse angulaire de rotation du volant, etc.), une consigne de couple volant, que l'on compare à la mesure du couple volant réel, effectivement exercé par le conducteur sur le volant à l'instant considéré, afin de déterminer ensuite une consigne de couple moteur que l'on applique à un moteur d'assistance pour que ledit moteur d'assistance agisse sur le mécanisme de direction afin que le couple volant réel, ressenti par le conducteur, suive ladite consigne de couple volant.

Généralement, la consigne de couple moteur est obtenue de manière proportionnelle, en multipliant la différence entre la consigne de couple volant (qui peut, dans certaines configurations d'assistance, être nulle) et le couple volant effectif, c'est-à-dire l'erreur de couple volant, par un gain d'assistance prédéterminé.

Une première difficulté, lors de la mise en œuvre d'un tel asservissement, tient au réglage de la valeur du gain d'assistance.

En effet, pour assurer un bon confort de manœuvre, notamment lorsque le véhicule est à l'arrêt (par exemple lorsque le conducteur effectue un braquage important pour quitter un stationnement) ou bien lorsque le véhicule roule à faible vitesse, si bien que la résistance que le mécanisme de direction, et plus particulièrement les pneumatiques, opposent à la manœuvre de braquage est relativement élevée, il est préférable de prévoir un gain d'assistance élevé, qui permet au moteur d'assistance de délivrer un couple élevé sans que le conducteur ait à exercer un couple important sur le volant de conduite.

Or, pour garantir la stabilité de l'asservissement de la direction, et ainsi notamment éviter l'apparition d'oscillations du volant, il est au contraire nécessaire de limiter le gain d'assistance, c'est-à-dire de maintenir ledit gain d'assistance en-deçà d'une valeur maximale admissible qui correspond à une marge de gain suffisante (au sens du critère de Nyquist).

Par ailleurs, la partie mécanique du dispositif de direction est soumise à différents phénomènes physiques, notamment à des phénomènes de frottements (secs et/ou visqueux) ou des phénomènes inertiels liés à la masse des différents organes constitutifs de ladite partie mécanique (arbre du moteur d'assistance, crémaillère, volant, roues, etc.).

Or, ces différents phénomènes peuvent avoir des effets indésirables en matière de ressenti au volant, c'est-à-dire sur la façon dont le conducteur perçoit tactilement, à travers le volant de conduite, le comportement de la direction, et donc plus généralement sur la façon dont le conducteur ressent et interprète intuitivement le comportement du véhicule.

En particulier, les frottements et l'inertie peuvent par exemple donner la sensation que la direction ne réagit pas lorsque l'on débute une manœuvre de braquage, c'est-à-dire lorsque le conducteur commence à tourner le volant, en donnant ainsi au conducteur une impression de pesanteur et de manque de réactivité.

A l'inverse, sitôt que le conducteur atteint, au volant, un effort suffisant pour que les frottements secs statiques soient vaincus, la direction peut se relâcher brusquement. Cet effet de décollement brutal (dit aussi « stick slip ») procure une sensation désagréable de conduite saccadée.

Un tel effet de décollement brutal est particulièrement sensible lors des « sorties de zéro », c'est-à-dire lorsque le conducteur commence à tourner le volant de conduite (vers la gauche ou bien, respectivement, vers la droite) depuis une position angulaire d'origine sensiblement centrée, de manière à faire passer le dispositif de direction d'un angle de braquage nul, qui correspond typiquement à une trajectoire en ligne droite, à un angle de braquage non nul, qui correspond à une trajectoire courbe, ou bien lors des inversions de braquage, c'est-à-dire lorsque le conducteur inverse le sens de rotation du volant (pour passer d'un braquage à droite à un braquage à gauche, ou inversement).

Pour limiter de tels effets, il est envisageable d'utiliser, lors de la détermination de la consigne de couple moteur, un retour de dérivée de couple volant, c'est-à-dire une branche de retour (« feedback ») qui mesure le couple volant effectif, c'est-à-dire la valeur du couple volant qui est effectivement exercé par le conducteur sur le volant de conduite, et qui calcule la dérivée temporelle de ce couple volant effectif, de manière à permettre la prise en considération de cette dérivée, pondérée par un gain de dérivée, lors de l'élaboration de la consigne de couple moteur.

Cependant, l'introduction d'un retour de dérivée dans la boucle d'asservissement du dispositif de direction peut également être source d'instabilité.

En particulier, le gain d'assistance et le gain de dérivée influant tous les deux sur les conditions globales de stabilité de l'asservissement, ces deux paramètres sont en pratique interdépendants, si bien que le réglage du gain de dérivée ne peut être réalisé que dans une plage conditionnée et limitée par la valeur du gain d'assistance, et réciproquement.

Dans une telle configuration, et au regard de la nécessité de conserver à tout moment une marge de gain suffisante pour garantir la stabilité de l'asservissement, il n'est donc par exemple pas possible de maximiser le gain de dérivée et de tirer pleinement profit de l'amélioration de ressenti procurée par l'action du retour de dérivée, ni, inversement, de maximiser le gain d'assistance pour optimiser l'action du moteur d'assistance et donc l'efficacité et le confort de l'assistance lors des manœuvres de la direction.

Il est connu du document EP2 177 421, un procédé d'asservissement d'un dispositif de direction assistée comprenant une étape de définition d'une consigne de couple volant, une étape de mesure de couple volant effectif, une étape de comparaison et une étape de détermination de consigne de couple moteur.

Le document EP 2 323 250 porte sur une unité de contrôle comprenant une unité de correction du couple volant effectif.

Le document US2013/311044 décrit une unité d'assistance de calcul, et une unité de commande.

Les objets assignés à l'invention visent par conséquent à améliorer les procédés connus d'asservissement de direction assistée de manière à pouvoir concilier une assistance efficace et puissante, un ressenti fidèle et confortable du comportement de la direction, ainsi qu'une excellente stabilité de l'asservissement.

Les objets assignés à l'invention sont atteints au moyen d'un procédé d'asservissement d'un dispositif de direction assistée comprenant un moteur d'assistance ainsi qu'un volant de conduite sur lequel un conducteur peut exercer un effort, dit « couple volant », ledit procédé comprenant une étape (a) de définition d'une consigne de couple volant, au cours de laquelle on génère une consigne de couple volant représentative d'une valeur de couple volant que l'on souhaite atteindre, une étape (b) de mesure de couple volant effectif, au cours de laquelle on mesure la valeur, dite « couple volant effectif », du couple volant qui est réellement exercé par le conducteur sur le volant de conduite, une étape (c) de comparaison au cours de laquelle on détermine la différence, dite « erreur de couple volant », entre la consigne de couple volant et le couple volant effectif, une étape (d) de détermination de consigne de couple moteur au cours de laquelle on génère une consigne de couple moteur qui est destinée à être appliquée au moteur d'assistance de manière à ce que le moteur d'assistance puisse agir pour réduire l'erreur de couple volant, ledit procédé étant caractérisé en ce que, au cours de l'étape (d) de détermination de la consigne de couple moteur, on génère la consigne de couple moteur à partir d'une part d'une première composante, dite « composante proportionnelle filtrée », obtenue en filtrant par un filtre à avance de phase l'erreur de couple volant pondérée par un premier gain dit « gain d'assistance », et d'autre part d'une seconde composante, dite « composante de retour de dérivée », obtenue en calculant la dérivée temporelle du couple volant effectif et en pondérant ladite dérivée temporelle du couple volant effectif par un second gain dit « gain de dérivée ».

Avantageusement, l'utilisation conjointe d'une composante proportionnelle filtrée par un filtre à avance de phase et d'une composante de retour de dérivée permet de faire reposer la stabilité globale de l'asservissement sur le filtre à avance de phase, si bien qu'il devient possible d'ajuster très librement, de façon quasiment indépendante, et notamment d'augmenter jusqu'à des valeurs élevées, chacun des gains d'assistance et de dérivée, de manière à pouvoir bénéficier pleinement et simultanément d'une part de la fonction d'amplification de la consigne moteur, et donc d'amplification de l'effort de manœuvre de la direction, procurée par le gain d'assistance, et d'autre part de la fonction d'amélioration (de lissage) du ressenti du comportement de la direction, procurée par le gain de dérivée.

En effet, puisque la stabilité de l'asservissement est garantie par la présence du filtre à avance de phase, qui vient compléter l'action proportionnelle du gain d'assistance, alors la stabilité de l'asservissement, pour un gain d'assistance donné, n'est quasiment plus dépendante du choix de la valeur du gain de dérivée, si bien que le réglage du gain de dérivée, et donc la qualité de l'amélioration du ressenti, est dé-corrélé du réglage de la stabilité.

L'invention permet ainsi de séparer la fonction de réglage de la stabilité, qui est assurée par le filtrage à avance de phase, de la fonction de réglage du ressenti, qui repose sur le choix du gain de dérivée.

Par conséquent, le réglage du gain de dérivée n'interférant plus avec le réglage de la stabilité de l'asservissement, et notamment avec le réglage de la stabilité à basse fréquence (typiquement en-dessous de 25 Hz), il est possible, en toutes circonstances, d'ajuster et de faire évoluer librement dans le temps le gain de dérivée, afin d'optimiser le ressenti du comportement de la direction, tout en restant libre du choix et de l'évolution dans le temps du gain d'assistance, ce qui permet d'adapter et d'optimiser également à tout moment le degré d'assistance procuré par le moteur d'assistance.

Les réglages respectifs de la stabilité, par le filtre à avance de phase, du degré (intensité) de l'assistance, par le gain d'assistance, et du ressenti du comportement de la direction, par le gain de dérivée, s'en trouvent donc simplifiés et optimisés, grâce au découplage de ces réglages obtenu par la présence du filtre à avance de phase.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue schématique, la mise en œuvre d'un procédé d'asservissement selon l'invention au sein d'un dispositif de direction assistée.

Les figures 2A et 2B illustrent les diagrammes de Bode, respectivement le diagramme de gain et le diagramme de phase, de filtres à avance de phase pouvant être utilisés par le procédé selon l'invention.

L'invention concerne un procédé d'asservissement d'un dispositif de direction assistée 1.

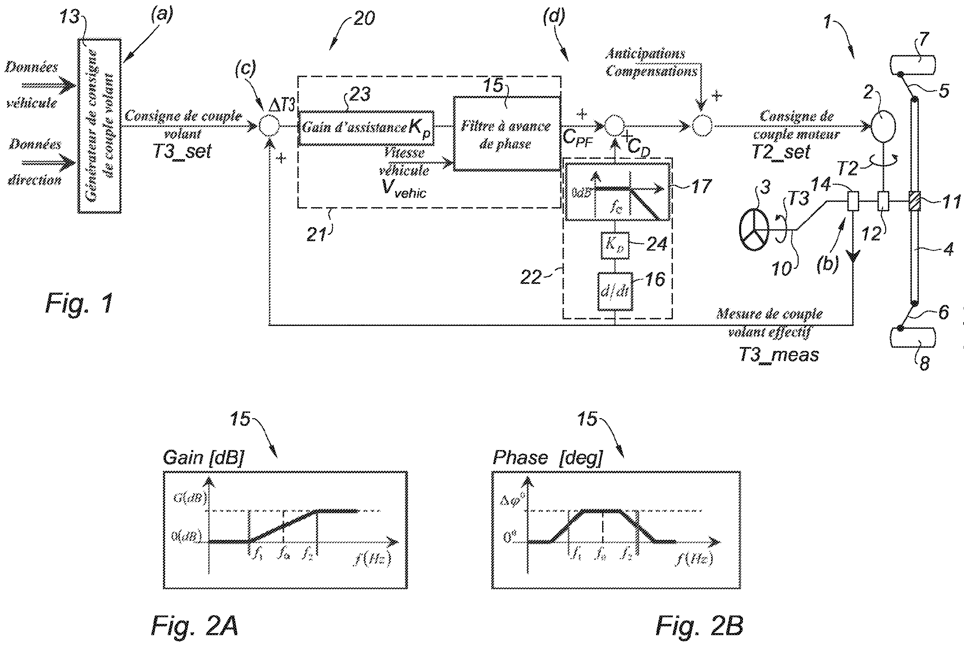

Tel que cela est illustré sur la figure 1, le dispositif de direction assistée 1 comprend un moteur d'assistance 2 ainsi qu'un volant de conduite 3 sur lequel un conducteur peut exercer un effort, et plus particulièrement un couple, dit « couple volant » T3.

Le dispositif de direction assistée 1 comprend de préférence également, de façon connue en soi, une crémaillère 4, qui est montée coulissante dans un carter de direction fixé sur le châssis du véhicule.

La crémaillère est reliée, respectivement par une biellette de direction gauche 5 et une biellette de direction droite 6, à une roue directrice gauche 7 et à une roue directrice droite 8, de telle sorte que le déplacement de la crémaillère 4 en translation provoque la modification de l'angle de braquage (orientation en lacet) desdites roues directrices 7, 8.

Le volant de conduite 3 est de préférence fixé sur une extrémité d'une colonne de direction 10, dont l'autre extrémité est pourvue d'un pignon d'entraînement 11 qui engrène sur la crémaillère 4.

Le moteur d'assistance 2 est de préférence un moteur électrique, à double sens de fonctionnement, par exemple un moteur « brushless ».

Le moteur d'assistance 2 est agencé de manière à pouvoir exercer un effort d'assistance, et plus particulièrement un couple d'assistance T2, sur la crémaillère 4, au moyen de tout mécanisme de transmission approprié.

A cet effet, le moteur d'assistance 2 peut par exemple venir en prise sur la colonne de direction 10, par l'intermédiaire d'un réducteur 12, tel qu'un réducteur à roue tangente et vis sans fin, pour former un mécanisme dit « à simple pignon », tel que cela est illustré sur la figure 1.

Selon une variante de réalisation non représentée, le moteur peut venir directement en prise sur la crémaillère 4, par exemple au moyen d'une vis à billes ou bien au moyen d'un pignon secondaire, distinct du pignon d'entraînement 11 fixé sur la colonne de direction 10, au sein d'un mécanisme dit « à double pignon ».

Bien entendu, le procédé selon l'invention est applicable à tout type de direction assistée 1, quelle que soit notamment la configuration d'entraînement de la crémaillère 4 par le moteur d'assistance 2, et plus globalement quelle que soit la configuration du mécanisme permettant au moteur d'assistance 2 de modifier l'orientation des roues directrices 7, 8.

Selon l'invention, ledit procédé comprend une étape (a) de définition d'une consigne de couple volant, au cours de laquelle on génère une consigne de couple volant *T3_set* qui est représentative d'une valeur de couple volant que l'on souhaite atteindre.

La grandeur asservie par le procédé est en effet le couple volant T3.

Selon une première possibilité de mise en œuvre particulièrement simplifiée, dite « asservissement conventionnel passif », l'étape (a) de définition d'une consigne de couple volant sera mise en œuvre, de façon unique et préalable, lors d'un réglage d'usine, ou bien même lors du codage informatique du programme correspondant au procédé d'asservissement. La consigne de couple volant T3_set sera alors fixe, et choisie arbitrairement égale à zéro.

Toutefois, selon une seconde possibilité de mise en œuvre, particulièrement préférée, dite « asservissement actif », l'étape (a) de définition d'une consigne de couple volant sera répétée périodiquement, de manière automatique, pour permettre le rafraichissement et l'évolution de la consigne de couple volant T3_set au fil du temps, en fonction des situations de vie du véhicule.

Selon cette seconde possibilité de mise en œuvre, et tel que cela est représenté sur la figure 1, la consigne de couple volant sera générée, en temps réel, par un module 13 générateur de consigne de couple volant, selon des lois d'assistance prédéfinies, qui peuvent typiquement se présenter sous forme de cartographies, ou « maps », et qui associent à chaque situation de vie du véhicule une consigne de couple volant T3_set qui correspond au couple volant T3 qui devrait être ressenti au volant à l'instant considéré compte-tenu de ladite situation de vie du véhicule..

A cet effet, le module 13 générateur de consigne de couple utilise en entrée d'une part des « données véhicule », représentatives de la situation dynamique du véhicule à l'instant considéré, telles que la vitesse longitudinale dudit véhicule, l'accélération latérale dudit véhicule, etc., et d'autre part, des « données direction », représentatives de la configuration du dispositif de direction 1 à l'instant considéré, telles que l'angle de braquage, la vitesse de rotation du volant de conduite 3, etc., données à partir desquelles ledit module générateur 13 détermine la consigne de couple volant T3_set.

Le procédé comprend également une étape (b) de mesure de couple volant effectif, au cours de laquelle on mesure la valeur, dite « couple volant effectif » *T3_meas,* du couple volant qui est réellement exercé par le conducteur sur le volant de conduite 3.

A cet effet, on pourra utiliser tout capteur de couple 14 approprié, et par exemple un capteur de couple magnétique, mesurant les déformations élastique en torsion d'une barre de torsion interposée entre une partie amont de la colonne de direction 10, qui porte le volant de conduite 3, et une partie aval de la colonne de direction 10, qui porte le pignon d'entraînement 11.

Le procédé comprend ensuite également une étape (c) de comparaison au cours de laquelle on détermine la différence, dite « erreur de couple volant » $\Delta T3$, entre la consigne de couple volant T3_set et le couple volant effectif T3_meas : $\Delta T3 = T3\_set - T3\_meas$ (ou inversement, selon la convention de signe retenue).

On notera que, par simple convention de représentation, sur la figure 1, le couple volant effectif T3_meas est affecté d'un signe positif, tandis que la consigne de couple volant T3_set est (implicitement) affectée du signe opposé, c'est-à-dire d'un signe négatif (si bien que l'on pose ici, formellement : ΔT3 = T3_meas - T3_set). Bien entendu, il pourrait en être inversement, sans sortir du cadre de l'invention.

Le procédé comprend ensuite une étape (d) de détermination de consigne de couple moteur au cours de laquelle on génère une consigne de couple moteur *T2_set* qui est destinée à être appliquée au moteur d'assistance 2 de manière à ce que le moteur d'assistance 2 puisse agir pour réduire l'erreur de couple volant ΔT3.

En d'autres termes, en application de la consigne de couple moteur T2_set, le moteur d'assistance 2 délivrera un couple d'assistance T2 qui permettra de faire converger le couple volant effectif T3_meas vers la valeur-cible que constitue la consigne de couple volant T3_set, ce qui aura pour effet de réduire l'erreur de couple ΔT3 (c'est-à-dire de la rapprocher de zéro).

Selon l'invention, au cours de l'étape (d) de détermination de la consigne de couple moteur, on génère la consigne de couple moteur T2_set à partir :

- d'une part d'une première composante, dite « composante proportionnelle filtrée » $C_{PF}$, obtenue en filtrant par un filtre à avance de phase 15 l'erreur de couple volant ΔT3 pondérée par un premier gain dit « gain d'assistance » $K_P$,
- et d'autre part d'une seconde composante, dite « composante de retour de dérivée » $C_D$, obtenue en calculant la dérivée (première) temporelle du couple volant effectif : d(T3_meas)/dt, et en pondérant ladite dérivée temporelle du couple volant effectif par un second gain dit « gain de dérivée » $K_D$.

Le gain d'assistance $K_P$, qui correspond ici à un coefficient d'amplification (proportionnelle) de l'erreur de couple ΔT3, peut avantageusement être fourni par une cartographie appropriée, et pourra le cas échéant évoluer en temps réel, de manière à adapter à chaque situation de vie du véhicule le dosage de l'assistance, et notamment le degré d'amplification de l'erreur de couple ΔT3 et donc l'intensité finale du couple d'assistance T2 délivré par le moteur d'assistance 2.

Le réglage (le choix) du gain d'assistance $K_P$ permettra donc de définir le niveau d'assistance souhaité, c'est-à-dire de quantifier le degré d'intervention du moteur d'assistance 2 (par rapport à l'effort manuel T3 exercé par le conducteur) dans l'action globale (manuelle et motorisée) de manœuvre de la direction 1.

De même, le gain de dérivée $K_D$ permettra, par une action proportionnelle sur la valeur de la dérivée temporelle du couple volant effectif d(T3_meas)/dt, de définir le ressenti du comportement de la direction, et plus particulièrement de choisir le degré de lissage du ressenti du comportement de la direction.

Ledit gain de dérivée $K_D$ pourra également être défini par une cartographie appropriée, et être susceptible d'évoluer dans le temps, en fonction de la situation de vie du véhicule.

Bien qu'il ne soit pas exclu d'utiliser, selon la configuration et la convention de programmation retenue pour mettre en œuvre le procédé, un gain d'assistance $K_P$ unitaire ou un gain de dérivée $K_D$ unitaire, lesdits gains $K_P$, $K_D$ seront de préférence non unitaires, et avantageusement réglables en fonction des besoins, et notamment en fonction de la situation de vie du véhicule.

Par ailleurs, on notera que l'asservissement proposé par l'invention, et notamment l'utilisation conjointe d'une composante de retour de dérivée $C_D$ et d'un filtre à avance de phase 15 appliqué à l'erreur de couple volant ΔT3, tel que cela a été décrit plus haut, est applicable tout aussi bien à un asservissement conventionnel passif, dans lequel la consigne de couple volant T3_set est fixe et nulle (et donc l'erreur de couple volant ΔT3 simplement égale à la valeur mesurée du couple volant effectif T3_meas), qu'à un asservissement actif, dans lequel on détermine en temps réel une consigne de couple volant T3_set évolutive (et le plus souvent non nulle).

Dans le cas de l'asservissement conventionnel passif, en l'absence de consigne (non nulle) de couple volant T3_set, l'invention reviendra simplement à utiliser conjointement d'une part une composante de retour de dérivée $C_D$ telle que décrite ci-dessus, calculée à partir de la dérivée du couple volant effectif T3_meas, et d'autre part un filtre à avance de phase 15 appliqué à une valeur simplement et directement proportionnelle (via le gain d'assistance $K_P$) à la valeur mesurée du couple volant effectif T3_meas.

En d'autres termes, l'asservissement conventionnel passif, particulièrement simplifié, calculera la composante proportionnelle filtrée $C_{PF}$ seulement à partir du retour que constitue la mesure du couple volant effectif T3_meas.

En tout état de cause, et notamment que l'on soit en présence d'une consigne de couple volant T3_set fixe et nulle, ou au contraire en présence d'une consigne de couple volant T3_set variable et (potentiellement) non nulle, l'utilisation conjointe d'un filtre à avance de phase 15 associé à l'erreur de couple volant ΔT3 et d'un module de dérivation 16 assurant un retour de dérivée du couple volant effectif T3_meas permet, comme cela a été indiqué plus haut, de cumuler d'une part les effets bénéfiques d'une amplification d'assistance librement choisie (par la composante proportionnelle filtrée $C_{PF}$), et notamment d'une amplification importante de l'assistance, avec d'autre part un niveau de ressenti du comportement de la direction 1 qui sera librement choisi (par la composante dérivée $C_D$), et notamment qui sera efficacement lissé pour en limiter, voire en « effacer », les saccades et autre impressions de pesanteur ou de retards, et ce tout en garantissant la stabilité, et notamment la stabilité basse fréquence, de l'asservissement (grâce au filtre à avance de phase 15).

A ce titre, on notera que la partie mécanique du dispositif de direction 1, qui comprend notamment les différents organes que sont le volant de conduite 3, la colonne de direction 10, la barre de torsion du capteur de couple 14 inséré sur ladite colonne de direction 10, le pignon d'entraînement 11, la crémaillère 4, les biellettes de direction 5, 6 et les roues directrices 7, 8, peut être globalement assimilé à un système masse-ressort, voire masse-ressort-amortisseur.

En particulier, l'effet ressort pourra provenir de l'élasticité intrinsèque des organes mécaniques, et notamment des organes mécaniques aisément déformables tels que la barre de torsion du capteur de couple 14 ou les pneumatiques qui équipent les roues 7, 8.

Or, un tel système masse-ressort (ou masse-ressort-amortisseur) possède (au moins) une fréquence fondamentale (fréquence de résonance) $f_0$, en pratique typiquement comprise entre 12 Hz et 20 Hz.

Dans ce domaine de basses fréquences (ici inférieures à 25 Hz, voire à 22 Hz, et plus particulièrement inférieures ou égales à 20 Hz), il convient donc de définir le gain (global) de l'asservissement de telle sorte que l'on ne risque pas de basculer dans un mode instable (oscillant) lorsque l'on excite le mécanisme de direction 1.

A cet effet, il est donc nécessaire de préserver, quel que soit notamment le gain d'assistance $K_P$, une marge de gain (valeur de gain qu'il faudrait ajouter pour amener le système à la limite de la stabilité) suffisante, c'est-à-dire graphiquement une distance suffisante entre le lieu de Nyquist (représentation, dans le plan complexe, de la fonction de transfert de l'asservissement en boucle ouverte) et le point de coordonnées (-1, 0).

C'est le rôle rempli par le filtre à avance de phase 15.

Le filtre à avance de phase 15 pourra être de tout type approprié, pourvu que ledit filtre 15 puisse donner au signal qu'il traite (ici l'erreur de couple volant pondérée par le gain d'assistance) une avance de phase, c'est-à-dire lui appliquer un déphasage $\Delta\varphi$ positif.

De préférence, le filtre à avance de phase 15 est un filtre du premier ordre.

Un tel choix permet de réaliser un filtrage simple, rapide, peu gourmand en ressources de calcul, et qui permet néanmoins d'assurer efficacement une stabilité suffisante, en compensant notamment les effets déstabilisateurs d'un accroissement du gain d'assistance $K_P$.

Bien entendu, le filtre à avance de phase 15 pourra être choisi de tout ordre $\underline{n}$ égal ou supérieur à 1, et par exemple former un filtre du second ou du troisième ordre.

Quel que soit l'ordre $\underline{n}$ retenu, le déphasage (maximal) $\Delta\varphi$ ainsi obtenu par un filtre à avance de phase d'ordre $\underline{n}$, c'est-à-dire en l'espèce l'avance de phase $\Delta\varphi$ (maximale) ainsi introduite, sera de +n*90 degrés, tel que cela est notamment illustré sur la figure 2B.

De même, le maximum de gain G(dB) d'amplification dudit filtre à avance de phase 15 sera de +n*20 dB.

De préférence, le filtre à avance de phase 15 se présente sous la forme :

$$H(s) = \frac{1 + T_1.s}{1 + T_2.s}$$

avec :

$T_1$ = 1/(2.$\pi$.$f_1$), où $f_1$ représente une première fréquence de coupure,

$T_2$ = 1/(2.$\pi$.$f_2$), où $f_2$ représente une seconde fréquence de coupure (plus élevée que la première fréquence de coupure $f_1$),

$\underline{s}$ est l'opérateur de Laplace.

Un tel filtre 15 correspond aux diagrammes illustrés sur les figures 2A et 2B.

Il offre avantageusement, entre les fréquences de coupures $f_1$, $f_2$, un plateau d'avance de phase $\Delta\varphi$ = +n*90 degrés, ainsi qu'une rampe de gain (qui démarre à la première fréquence de coupure $f_1$ et qui culmine ensuite asymptotiquement à partir de, et au-delà de, la seconde fréquence de coupure $f_2$).

Un tel filtre 15 permet avantageusement de définir, de manière simple et peu gourmande en ressources de calcul, l'intervalle [f1 ; f2] dans lequel ledit filtre 15 avance activement la phase, et agit donc activement pour stabiliser l'asservissement.

En pratique, les fréquences de coupure $f_1$, $f_2$ seront de préférence choisies de sorte à encadrer la fréquence fondamentale $f_0$ du mécanisme de direction.

A titre indicatif, la première fréquence de coupure $f_1$ (minimale) pourra être sensiblement égale à 6 Hz, tandis que la seconde fréquence de coupure $f_2$ (maximale) pourra être sensiblement égale à 22 Hz.

De préférence, le filtre à avance de phase 15 possédant au moins une première fréquence de coupure $f_1$, et de préférence une première et une seconde fréquence de coupure $f_1$, $f_2$, on ajuste la fréquence de coupure, et de préférence les fréquences de coupure $f_1$, $f_2$, en fonction de la vitesse longitudinale Vvehic du véhicule qui est équipé du dispositif de direction assistée 1, tel que cela est illustré sur la figure 1.

On peut ainsi avantageusement tenir compte du fait que la marge de stabilité (typiquement la marge de gain) peut être différente à l'arrêt (vitesse Vvehic nulle) et en roulage (vitesse Vvehic non nulle).

En effet, par exemple, l'élasticité du pneumatique peut intervenir de façon plus significative en roulage qu'à l'arrêt, et modifier ainsi la fréquence fondamentale $f_0$ du mécanisme de direction.

De même, le besoin d'assistance à la manœuvre de la direction 1 est plus important dans le cas d'un stationnement (vitesse sensiblement nulle), ou d'une circulation à basse vitesse (typiquement entre 0 et 50 km/h) qu'il ne l'est à vitesse plus élevée. On aura donc tendance à augmenter le gain d'assistance $K_P$ à faible vitesse, et ce d'autant plus que la vitesse Vvehic se rapproche de zéro, ce qui aura une incidence défavorable sur la stabilité, et nécessitera à ce titre une compensation plus large par le filtre à avance de phase 15.

Plus particulièrement, la première fréquence de coupure $f_1$ étant strictement inférieure à la seconde fréquence de coupure f2, on pourra augmenter la première fréquence de coupure $f_1$ et/ou diminuer la seconde fréquence de coupure f2 lorsque la vitesse longitudinale du véhicule Vvehic augmente, de sorte à réduire l'intervalle [f1 ; f2] compris entre la première fréquence de coupure $f_1$ et la seconde fréquence de coupure $f_2$.

Ainsi, on pourra réduire l'intervalle de fréquence [f1 ; f2] correspondant (sensiblement) à la largeur du plateau d'avance de phase $\Delta\varphi$ lorsque la vitesse du véhicule Vvehic augmente, notamment lorsque le véhicule passe d'une situation d'arrêt (vitesse nulle) à une situation de roulage (vitesse non nulle), et/ou lorsque la vitesse du véhicule Vvehic croît dans un domaine de basse vitesse, typiquement entre 0 km/h et 50 km/h.

A l'inverse, on pourra élargir l'intervalle [f1 ; f2] lorsque la vitesse du véhicule diminue, notamment lorsque ladite vitesse descend sous 50 km/h, et en particulier lorsque ladite vitesse s'annule.

De préférence, lors des modifications de la largeur de l'intervalle [f1 ; f2], celui-ci reste sensiblement centré sur une même fréquence centrale, constante, valant $1/2(f_1 + f_2)$, ladite fréquence centrale pouvant le cas échéant correspondre à la fréquence fondamentale $f_0$ du mécanisme de direction lorsque le véhicule est à l'arrêt.

Par ailleurs, de préférence, lors du calcul de la composante de retour de dérivée $C_D$, on applique un filtre passe-bas 17 afin de réduire le bruit numérique (de haute fréquence).

Ledit filtre passe-bas 17 sera de préférence appliqué après la pondération par le coefficient de dérivée $K_D$, pondération qui fait elle-même suite au module de dérivation 16, tel que cela est illustré sur la figure 1.

Le filtre passe-bas 17 possédera de préférence une fréquence de coupure fc comprise entre 150 Hz et 200 Hz, en particulier si la fréquence d'échantillonnage à laquelle s'effectue le rafraîchissement de l'asservissement, et notamment le rafraîchissement de la mesure du couple volant effectif T3_meas et le calcul de la dérivée dudit couple volant effectif, est sensiblement égale à 1 kHz, ce qui correspond à une période d'échantillonnage d'une milliseconde.

Grâce audit filtre passe-bas 17, on pourra éliminer le bruit numérique de fréquence supérieure à ladite fréquence de coupure fc.

On notera que, lors de l'étape (d) de détermination de la consigne de couple moteur, on réalise de préférence la somme algébrique de la composante proportionnelle filtrée $C_{PF}$ et de la composante de retour de dérivée $C_D$.

Bien que d'autres formes de combinaison de ces composantes $C_{PF}$, $C_D$ soient envisageables, la somme algébrique présente notamment l'avantage d'une grande simplicité.

La composante proportionnelle filtrée $C_{PF}$ et la composante de retour de dérivée $C_D$, ainsi que leur somme algébrique, sont donc homogènes à une consigne de couple moteur T2_set.

Le cas échéant, ladite somme algébrique des composantes proportionnelle filtrée $C_{PF}$ et de retour de dérivée $C_D$ peut être utilisée telle quelle comme consigne de couple moteur T2_set.

Toutefois, selon une variante possible de mise en œuvre, on peut également prévoir d'ajouter, à ladite somme algébrique des composantes proportionnelle filtrée $C_{PF}$ et de retour de dérivée $C_D$, d'autres composantes correctives, telle qu'une composante d'anticipation et/ou une composante de compensation, pour former, *in fine,* la consigne de couple moteur T2_set qui est alors appliquée au moteur d'assistance 2.

Une « composante d'anticipation », dite aussi « composante de pré-positionnement », est une composante correctrice, de type offset, qui est introduite d'emblée dans la consigne de couple moteur T2_set, typiquement pour augmenter l'ampleur de ladite consigne de couple moteur T2_set, lorsque l'on sait par avance, avant même d'appliquer au moteur d'assistance 2 la consigne de couple moteur T2_set, que le système de direction ne se comportera par exactement comme on souhaiterait qu'il se comporte.

A titre d'exemple, si l'on observe systématiquement l'apparition d'une erreur statique non nulle dont on connaît la valeur, la composante d'anticipation permettra d'augmenter la somme algébrique de la composante proportionnelle filtrée $C_{PF}$ et de la composante de retour de dérivée $C_D$ d'une valeur (d'offset) correspondant à ladite erreur statique.

Une « composante de compensation » pourra quant à elle être par exemple destinée à compenser les effets des frottements secs ou bien les effets de l'inertie du mécanisme de direction.

Dans le cas des frottements secs, on pourra calculer une valeur estimée desdits frottements, par tout moyen approprié, et ensuite appliquer une composante de compensation de frottement dont la valeur correspondra à ladite valeur estimée des frottements.

Dans le cas de l'inertie, qui tend à induire un retard dans la réaction du système, on pourra par exemple calculer une composante de compensation d'inertie dont la valeur sera égale au produit d'un gain (dit « gain de dérivée seconde »), représentatif de l'inertie, par la dérivée temporelle seconde de la position angulaire du volant de conduite (c'est-à-dire l'accélération angulaire du volant de conduite).

Bien entendu, l'invention concerne également en tant que tel un module d'asservissement 20 pour dispositif de direction assistée 1 comprenant un module 13 générateur de consigne de couple volant T3_set, un module (capteur) 14 de mesure du couple volant effectif T3_meas, un module d'amplification 21 permettant de générer la composante proportionnelle filtrée $C_{PF}$ à partir de l'erreur de couple volant $\Delta$T3, et un module de retour de dérivée 22 permettant de générer la composante de retour de dérivée $C_D$ à partir du couple volant effectif T3_meas mesuré.

Le module d'amplification 21 forme avantageusement une première branche, dite « branche proportionnelle », qui comporte un premier module de pondération 23 au sein duquel on multiplie l'erreur de couple volant ΔT3 par un gain d'assistance $K_P$, de sorte à obtenir une composante proportionnelle brute, ainsi qu'un filtre à avance de phase 15 que l'on applique à ladite composante proportionnelle brute de sorte à obtenir une composante proportionnelle filtrée $C_{PF}$.

Le module de retour de dérivée 22 forme quant à lui une seconde branche, dite « branche de retour de dérivée », distincte de la première branche proportionnelle, et qui comprend successivement un module de dérivation 16 qui calcule la dérivée temporelle première du couple volant effectif d(T3_meas)/dt, un second module de pondération 24, qui multiplie la dérivée temporelle première du couple de volant effectif par le gain de dérivée $K_D$, et un filtre passe-bas 17 qui élimine le bruit numérique.

Les deux branches 21, 22 se rejoignent ensuite (par leurs portions aval respectives, c'est-à-dire notamment en aval du filtre à avance de phase 15 pour la première branche proportionnelle 21, et en aval du module de dérivation 16, et plus particulièrement en aval du filtre passe-bas 17, pour la seconde branche de retour de dérivée 22) en une somme algébrique, qui combine les composantes proportionnelle filtrée $C_{PF}$ et de retour de dérivée $C_D$, et sert de base à la consigne de couple moteur T2_set.

Tout module 16, 20, 21, 22, 23, 24 et tout filtre 15, 17 mentionné ci-dessus, et en particulier le module d'asservissement 20 dans son ensemble, le filtre à avance de phase 15, le module de dérivation 16 et plus globalement le module de retour de dérivée 22, peut être réalisé par tout calculateur, ordinateur, carte électronique ou automate programmable approprié, la structure des modules et filtres pouvant être physique, et définie par le câblage des composants électroniques, et/ou virtuelle, et obtenue par programmation informatique.

L'invention n'est bien entendu nullement limitée aux variantes de réalisation susmentionnées, l'homme du métier étant notamment à même d'isoler ou de combiner librement entre elles l'une et/ou l'autre des caractéristiques décrites dans ce qui précède ou de leur substituer des équivalents.

En particulier, il n'est pas exclu de modifier l'ordre d'application du gain d'assistance $K_P$ et du filtre à avance de phase 15 au sein de la branche proportionnelle 21, ou l'ordre d'application du module de dérivation 16, du gain de dérivée $K_D$ et du filtre passe-bas 17 au sein de la branche de retour de dérivée 22.

## Revendications

**1.** Procédé d'asservissement d'un dispositif de direction assistée (1) comprenant un moteur d'assistance (2) ainsi qu'un volant de conduite (3) sur lequel un conducteur peut exercer un effort, dit « couple volant » (T3), ledit procédé comprenant une étape (a) de définition d'une consigne de couple volant, au cours de laquelle on génère une consigne de couple volant (T3_set) représentative d'une valeur de couple volant que l'on souhaite atteindre, une étape (b) de mesure de couple volant effectif, au cours de laquelle on mesure la valeur, dite « couple volant effectif » (T3_meas), du couple volant qui est réellement exercé par le conducteur sur le volant de conduite (3), une étape (c) de comparaison au cours de laquelle on détermine la différence, dite « erreur de couple volant » (ΔT3), entre la consigne de couple volant (T3_set) et le couple volant effectif (T3_meas), une étape (d) de détermination de consigne de couple moteur au cours de laquelle on génère une consigne de couple moteur (T2_set) qui est destinée à être appliquée au moteur d'assistance (2) de manière à ce que le moteur d'assistance puisse agir pour réduire l'erreur de couple volant (ΔT3), ledit procédé étant **caractérisé en ce que**, au cours de l'étape (d) de détermination de la consigne de couple moteur, on génère la consigne de couple moteur (T2_set) à partir d'une part d'une première composante, dite « composante proportionnelle filtrée » ($C_{PF}$), obtenue en filtrant par un filtre à avance de phase (15) l'erreur de couple volant (ΔT3) pondérée par un premier gain dit « gain d'assistance » ($K_P$), et d'autre part d'une seconde composante, dite « composante de retour de dérivée » ($C_D$), obtenue en calculant la dérivée temporelle du couple volant effectif (d(T3_meas)/dt) et en pondérant ladite dérivée temporelle du couple volant effectif par un second gain dit « gain de dérivée » ($K_D$).

**2.** Procédé selon la revendication 1 dans lequel le filtre à avance de phase (15) est un filtre du premier ordre.

**3.** Procédé selon la revendication 1 ou 2 **caractérisé en ce que** le filtre à avance de phase se présente

$$H(s) = \frac{1 + T_1 . s}{1 + T_2 . s}$$

sous la forme :      avec :

$T_1$ = 1/(2.π.$f_1$), où $f_1$ représente une première fréquence de coupure
$T_2$ = 1/(2.π.$f_2$), où $f_2$ représente une seconde fréquence de coupure
s est l'opérateur de Laplace.

**4.** Procédé selon l'une des revendications précédentes **caractérisé en ce que**, le filtre à avance de phase (15) possédant au moins une première fréquence de coupure ($f_1$), et de préférence une première et une seconde fréquence de coupure ($f_1$, $f_2$), on ajuste la fréquence de coupure, et de préférence les fréquences de coupure, en fonction de la vitesse longitudinale (Vvehic) du véhicule équipé du dispositif de direction assistée (1).

**5.** Procédé selon les revendications 3 et 4 **caractérisé en ce que**, la première fréquence de coupure ($f_1$) étant strictement inférieure à la seconde fréquence de coupure (f2), on augmente la première fréquence de coupure ($f_1$) et/ou l'on diminue la seconde fréquence de coupure (f2) lorsque la vitesse longitudinale (Vvehic) du véhicule augmente, de sorte à réduire l'intervalle ([f1 ; f2]) compris entre la première fréquence de coupure et la seconde fréquence de coupure.

**6.** Procédé selon l'une des revendications précédentes, **caractérisé en ce que**, lors du calcul de la composante de retour de dérivée ($C_D$), on applique un filtre passe-bas (17) afin de réduire le bruit numérique.

**7.** Procédé selon l'une des revendications précédentes **caractérisé en ce que**, lors de l'étape (d) de détermination de la consigne de couple moteur (T2_set), on réalise la somme algébrique de la composante proportionnelle filtrée ($C_{PF}$) et de la composante de retour de dérivée ($C_D$).

**Patentansprüche**

**1.** Verfahren zum Ansteuern einer Servolenkungsvorrichtung (1), umfassend einen Unterstützungsmotor (2), sowie ein Lenkrad (3) auf welches ein Lenker eine Kraft, "Lenkradmoment" (T3) genannt, ausüben kann, wobei das Verfahren einen Schritt (a) zum Definieren eines Lenkradmomentsollwerts, im Laufe dessen ein Lenkradmomentsollwert (T3_set), der repräsentativ für einen Lenkradmomentwert, den man erreichen möchte, generiert wird, einen Schritt (b) zum Messen des wirksamen Lenkradmoments, im Laufe dessen der Wert, "wirksames Lenkradmoment" (T3_meas) genannt, des Lenkradmoments gemessen wird, das tatsächlich durch den Lenker auf das Lenkrad (3) ausgeübt wird, einen Schritt (c) zum Vergleichen, im Laufe dessen die Differenz, "Lenkradmomentfehler" (ΔT3) genannt, zwischen dem Lenkradmomentsollwert (T3_set) und dem wirksamen Lenkradmoment (T3_meas) bestimmt wird, einen Schritt (d) zum Bestimmen des Motormomentsollwerts, im Laufe dessen ein Motormomentsollwert (T2_set) generiert wird, der dazu bestimmt ist, an dem Unterstützungsmotor (2) angelegt zu werden, sodass der Unterstützungsmotor handeln kann, um den Lenkradmomentfehler (ΔT3) zu reduzieren, umfasst, wobei das Verfahren **dadurch gekennzeichnet ist, dass** im Laufe des Schrittes (d) zum Bestimmen des Motormomentsollwerts der Motormomentsollwert (T2_set) einerseits aus einer ersten Komponente, "gefilterte Proportionalkomponente" ($C_{PF}$) genannt, die erhalten wird, indem man durch einen Phasenverschiebungsfilter (15) den Lenkradmomentfehler (ΔT3) filtert, der um eine erste Verstärkung, "Unterstützungsverstärkung" ($K_P$) genannt, gewichtet ist, und andererseits aus einer zweiten Komponente, "Ableitungsrückmeldekomponente" ($C_D$) genannt, die durch Berechnen der Zeitableitung des wirksamen Lenkradmoments (d(T3_meas/dt) und durch Gewichten der Zeitableitung des wirksamen Lenkradmoments um eine zweite Verstärkung, "Ableitungsverstärkung" ($K_D$) genannt, erhält, generiert wird.

**2.** Verfahren nach Anspruch 1, wobei der Phasenverschiebungsfilter (15) ein Filter erster Ordnung ist.

**3.** Verfahren nach Anspruch 1 oder 2, **dadurch gekennzeichnet, dass** sich der Phasenverschiebungsfilter in der folgenden Form darstellt:

$$H(s) = \frac{1 + T_1.s}{1 + T_2.s} \quad \text{mit:}$$

$T_1$ = 1/(2.$\pi$.$f_1$), wobei $f_1$ eine erste Grenzfrequenz darstellt
$T_2$ = 1/(2.$\pi$.$f_2$), wobei $f_2$ eine zweite Grenzfrequenz darstellt
s der Laplace-Operator ist.

**4.** Verfahren nach einem der vorstehenden Ansprüche, **dadurch gekennzeichnet, dass**, da der Phasenverschiebungsfilter (15) mindestens eine erste Grenzfrequenz ($f_1$), und vorzugsweise eine erste und eine zweite Grenzfrequenz ($f_1$, $f_2$) besitzt, die Grenzfrequenz, und vorzugsweise die Grenzfrequenzen in Abhängigkeit von der Längsgeschwindigkeit (Vvehic) des Fahrzeugs, das mit der Servolenkungsvorrichtung (1) ausgerüstet ist, angepasst wird.

**5.** Verfahren nach den Ansprüchen 3 und 4, **dadurch gekennzeichnet, dass**, da die erste Grenzfrequenz ($f_1$) streng kleiner als die zweite Grenzfrequenz ($f_2$) ist, die erste Grenzfrequenz ($f_1$) erhöht wird, und/oder die zweite Grenzfrequenz ($f_2$) verringert wird, wenn sich die Längsgeschwindigkeit (Vvehic) des Fahrzeugs erhöht, um das Intervall ([f1 ; f2)], das zwischen der ersten Grenzfrequenz und der zweiten Grenzfrequenz enthalten ist, zu verringern.

**6.** Verfahren nach einem der vorstehenden Ansprüche, **dadurch gekennzeichnet, dass** beim Berechnen der Ableitungsrückmeldekomponente ($C_D$) ein Tiefpassfilter (17) angewandt wird, um das digitale Rauschen zu verringern.

7. Verfahren nach einem der vorstehenden Ansprüche, **dadurch gekennzeichnet, dass** beim Schritt (d) zum Bestimmen des Motormomentsollwerts (T2_set) die algebraische Summe der gefilterten Proportionalkomponente ($C_{PF}$) und der Ableitungsrückmeldekomponente ($C_D$) erstellt wird.

**Claims**

1. A servo-control method of a power steering device (1) comprising an assist motor (2) and a steering wheel (3) on which a driver can exert a force, called "steering wheel torque" (T3), said method comprising a step (a) of defining a steering wheel torque setpoint, comprising generating a steering wheel torque setpoint (*T3_set*) representative of a steering wheel torque value to be reached, a step (b) of measuring an actual steering wheel torque, comprising measuring the value, called "actual steering wheel torque" (*T3_meas*), of the steering wheel torque which is really exerted by the driver on the steering wheel (3), a comparison step (c) comprising determining the difference, called "steering wheel torque error" (*ΔT3*), between the steering wheel torque setpoint (*T3_set*) and the actual steering wheel torque (*T3_meas*), a step (d) of determining the motor torque setpoint, comprising generating a motor torque setpoint (*T2_set*) which is intended to be applied to the assist motor (2) so that the assist motor can act to reduce the steering wheel torque error (*ΔT3*), said method being **characterized in that**, during the step (d) of determining the motor torque setpoint, the motor torque setpoint (*T2_set*) is generated, on the one hand, from a first component, called "filtered proportional component" ($C_{PF}$), obtained by filtering, by a phase-lead filter (15), the steering wheel torque error (*ΔT3*) weighted by a first gain called "assist gain" ($K_P$) and, on the other hand, a second component, called "derivative feedback component" ($C_D$), obtained by calculating the time derivative of the actual steering wheel torque (*d(T3_meas)/dt*) and weighting said time derivative of the actual steering wheel torque by a second gain called "derivative gain" ($K_D$).

2. The method according to claim 1, wherein the phase-lead filter (15) is a first order filter.

3. The method according to claim 1 or 2, **characterized in that** the phase-lead filter is in the form of:

$$H(s) = \frac{1+T_1.s}{1+T_2.s}$$ with:

$T_1$ = 1/(2.$\pi$.$f_1$), where $f_1$ represents a first cutoff frequency

$T_2$ = 1/(2.$\pi$.$f_2$), where $f_2$ represents a second cutoff frequency
s is the Laplace operator.

4. The method according to any of the preceding claims, **characterized in that**, with the phase-lead filter (15) having at least a first cutoff frequency ($F_1$), and preferably a first and a second cutoff frequency ($f_1$, $f_2$), the cutoff frequency, and preferably the cutoff frequencies, is/are set according to the longitudinal speed ($V_{vehic}$) of the vehicle equipped with the power steering device (1).

5. The method according to claims 3 and 4, **characterized in that**, with the first cutoff frequency ($f_1$) being strictly lower than the second cutoff frequency ($f_2$), the first cutoff frequency ($f_1$) is increased and/or the second cutoff frequency ($f_2$) is decreased when the longitudinal speed ($V_{vehic}$) of the vehicle increases, so as to reduce the interval ([$f_1$; $f_2$]) comprised between the first cutoff frequency and the second cutoff frequency.

6. The method according to any of the preceding claims, **characterized in that**, during the calculation of the derivative feedback component ($C_D$), a low-pass filter (17) is applied in order to reduce the digital noise.

7. The method according to any of the preceding claims, **characterized in that**, during the step (d) of determining the motor torque setpoint (*T2_set*), the algebraic sum of the filtered proportional component ($C_{PF}$) and of the derivative feedback component ($C_D$) is made.

# Fig. 1

Données véhicule

Données direction

Générateur de consigne de couple volant — 13 — (a)

Consigne de couple volant $T3\_set$

(c) $\Delta T3$

20

23 — Gain d'assistance $K_p$

Vitesse véhicule $V_{vehic}$

21

15 — Filtre à avance de phase

(d)

Anticipations Compensations

$C_{PF}$  $C_D$

17 — 0dB  $f_c$

22 — 24 $K_p$

16 $d/dt$

Consigne de couple moteur $T2\_set$

Mesure de couple volant effectif $T3\_meas$

1, 2, 3, 4, 5, 6, 7, 8, 10, 11, 12, 14

$T2$  $T3$  (b)

*Fig. 1*

---

Gain [dB] — 15

$G(dB)$

$0(dB)$

$f_1$  $f_0$  $f_2$  $f(Hz)$

*Fig. 2A*

---

Phase [deg] — 15

$\Delta\varphi°$

$0°$

$f_1$  $f_0$  $f_2$  $f(Hz)$

*Fig. 2B*

EP 3 310 640 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2177421 A
- EP 2323250 A
- US 2013311044 A